Europäisches Patentamt

European Patent Office

Office européen des brevets

(11) Numéro de publication: **0 401 112**
A1

# (12) DEMANDE DE BREVET EUROPEEN

(21) Numéro de dépôt: 90401436.2

(51) Int. Cl.⁵: **F16B 7/04**

(22) Date de dépôt: **30.05.90**

(30) Priorité: **30.05.89 FR 8907281**

(43) Date de publication de la demande:
**05.12.90 Bulletin 90/49**

(84) Etats contractants désignés:
**AT BE CH DE DK ES FR GB GR IT LI LU NL SE**

(71) Demandeur: **Savreux Christian, Félix Augustin**
**P.B. 12**
**F-33140 Villenave d'Ornon(FR)**

(72) Inventeur: **Savreux Christian, Félix Augustin**
**P.B. 12**
**F-33140 Villenave d'Ornon(FR)**

(74) Mandataire: **Nony, Michel et al**
**Cabinet NONY & CIE, 29, rue Cambacérès**
**F-75008 Paris(FR)**

(54) Dispositif d'assemblage de tubes.

(57) Il comporte des cames (11.1,11.2) diamètralement opposées, pour prendre appui sur la surface interne d'un tube, des coins (11.3,11.4) disposés aux extrémités des cames (11.1,11.2) et des moyens (18) pour rapprocher les coins (11.3,11.4) pour appliquer les cames (11.1,11.2) contre la surface interne du tube.

FIG.2

## Dispositif d'assemblage de tubes

La présente invention se rapporte principalement à des dispositifs d'assemblage de tubes, notamment pour constituer des rambardes ou portails.

Il est connu de réaliser des rambardes, notamment pour balcon, par soudure de tubes métalliques. Ce type d'assemblage présente de nombreux inconvénients. Ils est difficile à mettre en oeuvre et nécessite l'intervention d'un professionnel. La soudure provoque l'altération du traitement des surfaces qui entraine l'apparition de la rouille.

De plus, la fixation étant définitive, la structure obtenue n'est pas réutilisable pour réaliser une rambarde ayant des dimensions différentes.

Le dispositif d'assemblage de tubes selon la présente invention permet un assemblage aussi bien provisoire que définitif des tubes, notamment métalliques.

Le dispositif d'assemblage selon la présente invention comporte au moins deux cames diamètralement opposées pénétrant à l'intérieur du tube, ainsi que des moyens permettant d'appliquer lesdites cames sur la surface interne du tube.

La surface d'application des cames est suffisante pour permettre un assemblage sûr sans entrainer de déformation du tube. Deux coins sont placés aux extrémités des cames. Des moyens, en assurant le rapprochement des coins, assurent l'écartement des cames et par suite leur application sur la surface interne du tube.

Dans une réalisation particulièrement avantageuse du dispositif selon la présente invention, le dispositif d'assemblage comporte une pièce unique qui se brise, à l'intérieur d'un tube sous l'action d'une force, par exemple exercée par le serrage d'une vis, de façon à former deux cames et deux coins.

Dans la première variante de réalisation, le dispositif d'assemblage selon la présente invention comporte deux pièces solidarisées par exemple à 90 degrés pour pénétrer dans l'extrémité d'un tube. On assure ainsi la solidarisation à angle droit de deux tubes.

Dans une seconde variante de réalisation, le dispositif d'assemblage selon la présente invention comporte une unique pièce destinée à pénétrer l'extrémité d'un seul tube, et un plateau pour assemblage avec un dispositif d'assemblage identique fixé à l'extrémité d'un deuxième tube.

L'invention a principalement pour objet un dispositif d'assemblage de tubes, caractérisé par le fait qu'il comporte des cames diamètralement opposées, pour prendre appui sur la surface interne d'un tube, des coins disposés aux extrémités des cames et des moyens pour rapprocher les coins pour appliquer les cames contre la surface interne du tube.

L'invention sera mieux comprise au moyen de la description ci-après, et des figures annexées, données comme des exemples non limititifs, parmi lesquels :
- la figure 1a est une vue de dessus d'un exemple de réalisation du dispositif selon la présente invention ;
- la figure 1b est une vue de côté du dispositif de la figure 1a ;
- la figure 2 est un schéma illustrant la mise en oeuvre du dispositif de la figure 1 ;
- la figure 3 est une vue en perspective illustrant l'assemblage de deux dispositifs de la figure 1 ;
- la figure 4 est une vue de côté illustrant la mise en oeuvre du dispositif selon la présente invention.

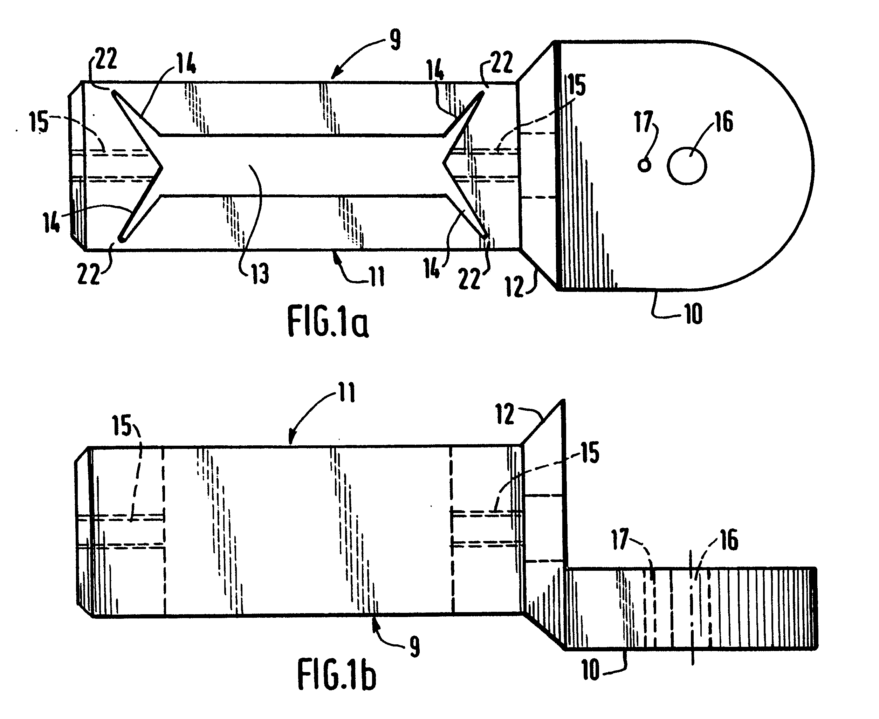

Sur les figures 1 à 4 on a utilisé les mêmes références pour désigner les mêmes éléments.

Sur la figure 1, on peut voir un exemple avantageux de réalisation d'un dispositif d'assemblage 9 selon la présente invention.

Le dispositif 9 comporte une pièce unique 11 destinée à pénétrer dans l'extrémité d'un tube, non représenté, relié par une pièce intermédiaire 12, à un plateau d'assemblage 10.

La pièce 11 comporte un évidement 13 terminé par quatre saignées 14.

Les saignées 14 vont de l'évidement 13 vers les bords de la pièce 11, par exemple à 45 degrés.

Ces saignées 14 se terminent par des jonctions provisoires 22.

En brisant les jonctions provisoires 22, la pièce 11 se sépare au moins en quatre, de façon à former au moins deux cames et deux coins placés alors à leurs extrémités.

Avantageusement, on brise les jonctions provisoires 22 en exerçant une traction sur les côtés opposés de la pièce 11, selon l'axe de l'extrémité du tube. Cette traction avantageusement exercée par l'intermédiaire d'une vis, non représentée, par exemple de type BTR, sur un pas de vis 15.

La vis passe avantageusement par l'évidement 13.

Le plateau 10 permet l'assemblage d'une pluralité du dispositif d'assemblage 9. Il comporte par exemple une ouverture 16 permettant l'assemblage de deux plateaux 10 par vissage.

Avantageusement la vis constitue l'axe de rotation des deux dispositifs d'assemblage 9, permettant de former un portique.

Avantageusement, le dispositif d'assemblage 9 comporte des moyens 17,21 permettant de bloquer la rotation. Les moyens 17 sont par exemple des trous permettant le passage d'une goupille 21.

Dans la première variante de réalisation du dispositif selon la présente invention, l'épaisseur du plateau 10 est égale à la moitié de l'épaisseur de l'assemblage des deux dispositifs d'assemblage 9.

Avantageusement, le plateau 10 a une épaisseur sensiblement égale au tiers de l'épaisseur de l'assemblage des dispositifs d'assemblage 9 selon la présente invention.

Ainsi, il est possible d'effectuer l'assemblage des trois dispositifs d'assemblage 9 si cela est nécessaire.

Dans le cas contraire, on intercale entre les deux plateaux 10 de deux dispositifs 9 selon la présente invention un espaceur 8 constitué par exemple par une rondelle d'épaisseur égale à celle des plateaux 10.

Chaque dispositif d'assemblage 9 selon la présente invention doit rentrer à force à l'extrémité d'un tube à assembler. Ceci est facilité par les pans coupés de la pièce 11.

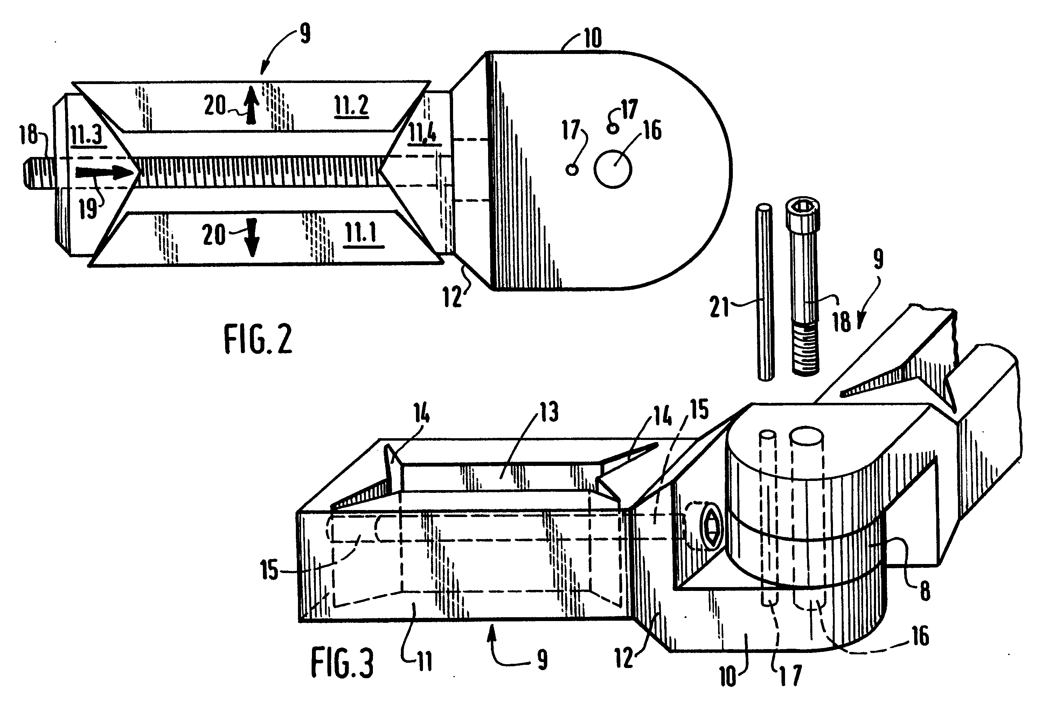

Comme illustré sur la figure 2, en vissant une vis 18 dans la pièce 11, on exerce une force 19. La force 19 brise les jonctions provisoires 22.

La pièce 11 est brisée en deux cames 11.1 et 11.2 aux extrémités desquelles sont placés deux coins 11.3 et 11.4.

En continuant à visser la vis 18, les coins 11:3 et 11.4 écartent les cames 11.1 et 11.2 qui exercent des forces 20 sur les parois internes du tube, non représentées.

Avantageusement, la vis 18 est une vis à tête hexagonale se logeant dans la pièce de liaison 12 entre la pièce 11 et le plateau 10.

La présence du plateau 10 permet d'effectuer la fixation des dispositifs d'assemblage 9 sur chacun des tubes à assembler, puis d'effectuer l'assemblage des deux dispositifs d'assemblage 9, et ce quel que soit l'angle désiré. Notamment, il est possible d'assembler deux tubes l'un dans le prolongement de l'autre, sans que l'on soit gêné pour accéder aux têtes des vis 18 pour effectuer le serrage.

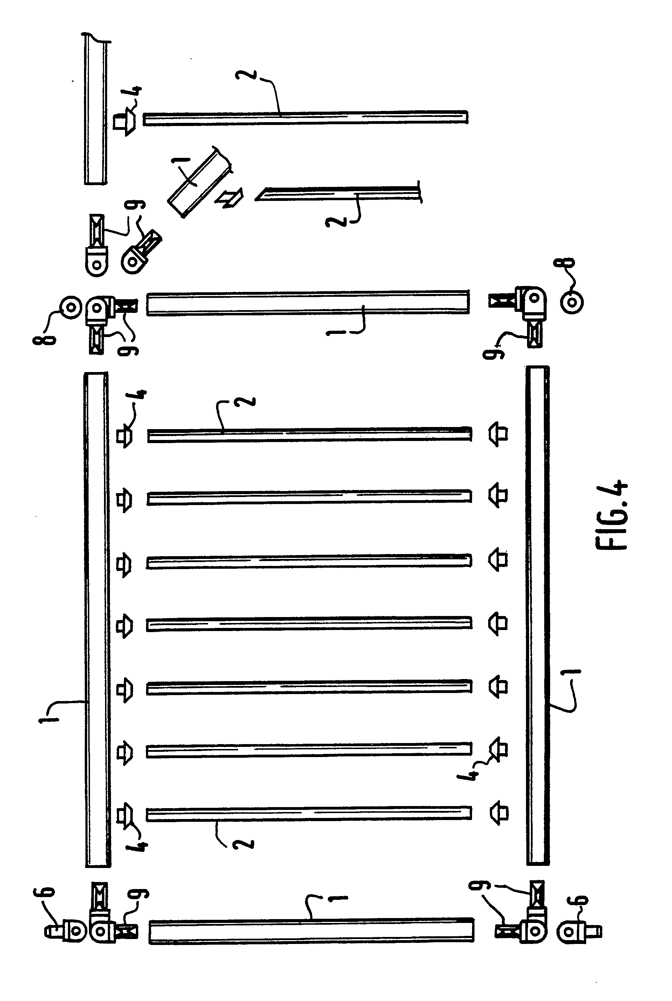

Ainsi, il peut être avantageux de munir le plateau 10 d'ouvertures 17, placées dans diverses positions par exemple dans l'axe du tube et/ou perpendiculairement à cet axe, de façon à pouvoir effectuer un blocage par une goupille, aussi bien dans le prolongement qu'à angle droit. Ce dernier cas est illustré sur la figure 3.

Une immobilisation des deux dispositifs 9 selon la présente invention est assurée par une goupille 21.

L'assemblage des deux plateaux 10 s'est effectué avec l'interposition d'un espaceur formé par une rondelle 8. L'assemblage des dispositifs 9 est effectué avec une vis 18.

Avantageusement, la longueur de la vis 18, tête comprise, est égale ou inférieure à l'épaisseur de l'assemblage, de façon à ce que la vis 18 soit entièrement incluse dans l'ouverture 17.

Sur la figure 4, on peut voir diverses possibilités d'assemblage des dispositifs 9 selon la présente invention. Les dispositifs d'assemblage 9 permettent d'assembler par exemple deux tubes 1 horizontaux et deux tubes 1 verticaux, de façon à former un rectangle.

Ce rectangle peut être prolongé avec d'autres tubes par exemple horizontaux ou placé à 45 degrés comme illustré sur la droite de la figure 4.

Avantageusement, des barreaux 2 de faible diamètre, relient les tubes horizontaux 1, par exemple par l'intermédiaire des pièces de fixation 4 placées dans les ouvertures des dits tubes.

Avantageusement, les pièces 4 aussi bien que les dispositifs 9 selon la présente invention, assurent l'étanchéité au niveau des ouvertures.

Avantageusement, les barreaux 2 sont des sections carrées ou rectangulaires.

Toutefois, l'utilisation de barreaux 2 ou de tubes 1, par exemple de section circulaire, et des dispositifs d'assemblage 9 adaptés ne sort pas du cadre de la présente invention.

Le dispositif selon la présente invention permet la réalisation d'assemblages modulaires des tubes 1 et 2. Par exemple le cadre constitué par les quatre tubes 1 équipés de barreaux 2, permet de réaliser une rambarde, par exemple de balcon.

Dans un tel cas, l'espacement des barreaux verticaux 2 est suffisament faible pour répondre aux normes en vigueur, et par exemple pour empêcher la chute d'un enfant.

Le montage des pivots 6 sur un des barreaux verticaux permet de constituer un portail.

La possibilité de régler l'angle contre le dispositif d'assemblage 9 permet de suivre les pentes, les retours ou les décrochements.

Le dispositif 9 selon la présente invention est avantageusement réalisé en matière plastique.

La réalisation par injection de polyamide permet de réaliser des dispositifs d'assemblage 9 selon la présente invention particulièrement performants.

L'invention s'applique principalement à la réalisation de portails, de clôtures et de rambardes, notamment de rambardes pour balcons, terrasses ou délimitantes de voies piétonnes.

**Revendications**

1. Dispositif d'assemblage de tubes, caractérisé par le fait qu'il comporte des cames (11.1, 11.2) diamètralement opposées, pour prendre appui sur la surface interne d'un tube, des coins (11.3,11.4) disposés aux extrémités des cames (11.1,11.2) et des moyens (18) pour rapprocher les coins (11.3,11.4) pour appliquer les cames (11.1,11.2) contre la surface interne du tube.

2. Dispositif selon la revendication 1, caractérisé par le fait qu'il comporte une pièce unique (9) qui, sous l'action d'une force (19) se brise de façon à former les cames (11.1,11.2) et les coins (11.3,11.4).

3. Dispositif selon la revendication 2, caractérisé par le fait que la pièce unique (9) comporte un évidement central (13) d'où partent, sensiblement à 45 degrés, 4 saignées (14) qui sont séparées des bords de la pièce unique (9) par des jonctions provisoires (22).

4. Dispositif selon l'une quelconque des revendications précédentes, caractérisé par le fait que les moyens (18) pour rapprocher les coins (11.3,11.4) comportent une vis.

5. Dispositif selon l'une quelconque des revendications précédentes, caractérisé par le fait que ledit dispositif est un dispositif d'assemblage de tubes de sections rectangulaires.

6. Dispositif selon les revendications 2, 3, 4 ou 5, caractérisé par le fait que la pièce unique (9) est réalisée en matière plastique, notamment en polyamide.

7 Dispositif selon l'une quelconque des revendications précédentes, caractérisé par le fait qu'il comporte un plateau (10) pour assemblage avec d'autres dispositifs d'assemblage de tubes.

8. Dispositif selon la revendication 7, caractérisé par le fait que l'épaisseur du plateau d'assemblage (10) est sensiblement égale au tiers de l'épaisseur totale des dispositifs d'assemblage assemblés.

9. Dispositif selon les revendications 7 ou 8, caractérisé par le fait qu'il comporte des moyens (16,18) permettant la rotation relative des dispositifs d'assemblage de tubes (9).

10. Dispositif selon la revendication 9, caractérisé par le fait qu'il comporte des moyens (17,21) de blocage de la rotation des deux dispositifs d'assemblage (9) assemblés.

FIG.1a

FIG.1b

EP 0 401 112 A1

FIG.2

FIG.3

EP 0 401 112 A1

FIG.4

EP 0 401 112 A1

Office européen
des brevets

**RAPPORT DE RECHERCHE EUROPEENNE**

Numero de la demande

EP 90 40 1436

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | CH-A-488120 (U. SCHÄRER SÖHNE AG) <br> * le document en entier * | 1, 4, 5, 6 | F16B7/04 |
| Y | | 2, 7-10 | |
| Y | EP-A-8555 (ROBILLARD ROGER) <br> * page 5, ligne 36 - page 8, ligne 11; figures 1-3 * | 7-10 | |
| Y | FR-A-2330902 (BREDAL TORBEN) <br> * page 3, ligne 23 - page 4, ligne 41; figures * | 2 | |
| A | | 3 | |
| X | CH-A-429317 (U. SCHÄRER SÖHNE) <br> * le document en entier * | 1, 4 | |
| X | FR-A-2250877 (ELMADUC) <br> * page 1, ligne 28 - page 3, ligne 11; figures * | 1, 5 | |

DOMAINES TECHNIQUES RECHERCHES (Int. Cl.5 )

F16B

Le présent rapport a été établi pour toutes les revendications

| Lieu de la recherche | Date d'achèvement de la recherche | Examinateur |
|---|---|---|
| LA HAYE | 07 SEPTEMBRE 1990 | ARESO Y SALINAS |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)